# EUROPEAN PATENT SPECIFICATION

(11) **EP 3 663 958 B1**
(45) Date of publication and mention of the grant of the patent: **21.06.2023**
(21) Application number: 18841743.0
(22) Date of filing: 24.07.2018
(51) Int. Cl.: G06F 21/74, G06F 21/52, G06F 21/55, G06F 9/54

(54) **TRUSTED KERNEL-BASED ATTACK-PREVENTION DATA PROCESSOR**
VERTRAUENSWÜRDIGER ANGRIFFSVERHINDERUNGSDATENPROZESSOR AUF KERNEL-BASIS
PROCESSEUR DE DONNÉES DE PRÉVENTION D'ATTAQUE BASÉ SUR UN NOYAU DE CONFIANCE

(30) Priority: 01.08.2017 CN 201710648239
(43) Date of publication of application: 10.06.2020
(73) Proprietor: Alibaba Group Holding Limited, George Town, Grand Cayman (KY)
(72) Inventor: CUI, Xiaoxia, Hangzhou Zhejiang 310012 (CN); LI, Chunqiang, Hangzhou Zhejiang 310012 (CN); HOU, Guangen, Hangzhou Zhejiang 310012 (CN); CHEN, Li, Hangzhou Zhejiang 310012 (CN)
(74) Representative: Finnegan Europe LLP
(86) International application number: PCT/CN2018/096759
(87) International publication number: WO 2019/024708

(56) References cited:
- CN-A- 106 599 717
- CN-A- 106 599 717
- CN-A- 106 775 971
- CN-A- 106 778 365
- CN-A- 107 463 856
- US-A1- 2003 225 817
- US-A1- 2014 122 902

## Description

### Technical Field

The present invention relates to the field of information security technologies, and in particular, to a trusted kernel-based anti-attack data processor.

### Background Art

With the development of the mobile Internet and the Internet of Things and the extensive application of information technologies in production, operation and management, the human economic society increasingly relies on the network and information systems. Moreover, frequent occurrence of virus invasion, hacker intrusion, information theft and other events has made the system security assurance increasingly important and attract more attention.

At present, the security of system information is guaranteed to some extent by the introduction of a security mode. In the security mode, hardware isolation is really implemented in the system. A system kernel is the basis of the whole system, runs at the highest privilege level of the whole system, manages and controls underlying hardware resources, and provides securely isolated resource abstraction and access interfaces for an upper-layer application program. An operating system for running a trusted kernel in the security mode is independent of an operating system running in a non-security mode. The trusted kernel provides security authentication, encryption and decryption, sensitive data storage, and other services. Physical isolation performed by a hardware security component ensures that an operating system in the non-security mode cannot directly access resources in the security mode, thus reducing an attack surface.

However, an attacker can still obtain sensitive data and so on by a series of means to attack a trusted kernel in the non-security mode, which can even cause system crash.

Therefore, it is urgent to design a program control in a trusted kernel so as to guard against such attacks.

CN 106 599 717 A discloses switching between a trusted and a non-trusted kernel. CN 106 775 971 A discloses provision of a trusted kernel interrupt service program entry. US 2014/122902 A1 discloses state switching using a secure monitor.

### Summary of the Invention

The present invention provides a trusted kernel-based anti-attack data processor as defined in the appended claims, which can provide an underlying software protection mechanism in a trusted kernel to solve the shortcomings in the prior art, thus enhancing the security of the trusted kernel.

The present invention provides a trusted kernel-based anti-attack data processor, including:
a trusted kernel exception vector table configured to provide a processing entry of kernel switching;
a trusted kernel stack pointer register configured to store a trusted kernel stack pointer that points to a trusted kernel stack space; and
a trusted site in the trusted kernel stack space, the trusted site including a program status register configured to store a flag bit of a starting kernel for the kernel switching, a program pointer, and a general register;
wherein when the data processor performs kernel switching from a non-trusted kernel to a trusted kernel, the trusted kernel is addressed to the processing entry of the kernel switching and performs the switching.

Optionally, the processing entry that provides kernel switching includes a kernel switching instruction exception entry and a trusted interrupt processing entry.

Optionally, the trusted kernel is addressed to the processing entry of the kernel switching and performs the switching by means of a kernel switching instruction, a kernel switching return instruction, or an interrupt response.

Optionally, when the trusted kernel performs the switching by means of the kernel switching return instruction, it is necessary to judge, according to a flag bit of a starting kernel of the program status register, whether to return to the starting kernel or stay in the current kernel.

Optionally, the trusted kernel is addressed to the kernel switching instruction exception entry through an entry vector table called by a cross-kernel task.

Optionally, the trusted kernel is addressed to the trusted interrupt processing entry through the trusted kernel exception vector table.

Optionally, when the trusted kernel is switched to the non-trusted kernel in response to a non-trusted interrupt, the trusted kernel saves the trusted site in the trusted kernel stack space; and
after the non-trusted kernel has processed the non-trusted interrupt, the trusted kernel restores the trusted site from the trusted kernel stack space when the non-trusted kernel is switched to the trusted kernel by calling the kernel switching return instruction.

Optionally, the trusted site is a site before the trusted kernel is switched to the non-trusted kernel in response to the non-trusted interrupt.

Optionally, when the non-trusted kernel modifies a starting kernel flag of the program status register and is switched to the trusted kernel by executing the kernel switching return instruction, the trusted kernel restores the trusted site from the trusted kernel stack space.

Optionally, the trusted site is a site before the trusted kernel is proactively switched to the non-trusted kernel for the first time.

The trusted kernel-based anti-attack data processor provided in embodiments of the present invention provides an underlying software protection mechanism for all switching entries of the trusted kernel and can make switching between a trusted kernel and a non-trusted kernel more secure.

### Brief Description of the Drawings

FIG. 1 is a schematic diagram of a basic architecture of a trusted kernel-based anti-attack data processor according to the present invention;
FIG. 2 is a schematic running diagram when a data processor executes a kernel switching instruction normally according to an embodiment of the present invention;
FIG. 3 is a schematic running diagram showing that a non-trusted kernel executes a kernel switching return instruction to return to a trusted kernel after the trusted kernel responds to an interrupt of the non-trusted kernel according to an embodiment of the present invention; and
FIG. 4 is a schematic running diagram of an illegal kernel switching exception according to an embodiment of the present invention.

### Detailed Description

In order to make the objectives, technical solutions and advantages of the embodiments of the present invention much clearer, the technical solutions in the embodiments of the present invention will be clearly and completely described in the following with reference to the accompanying drawings in the embodiments of the present invention. It is apparent that the embodiments described are merely some of rather than all of the embodiments of the present invention. Based on the embodiments in the present invention, all other embodiments obtained by those of ordinary skill in the art without creative efforts shall all be encompassed in the protection scope of the present invention.

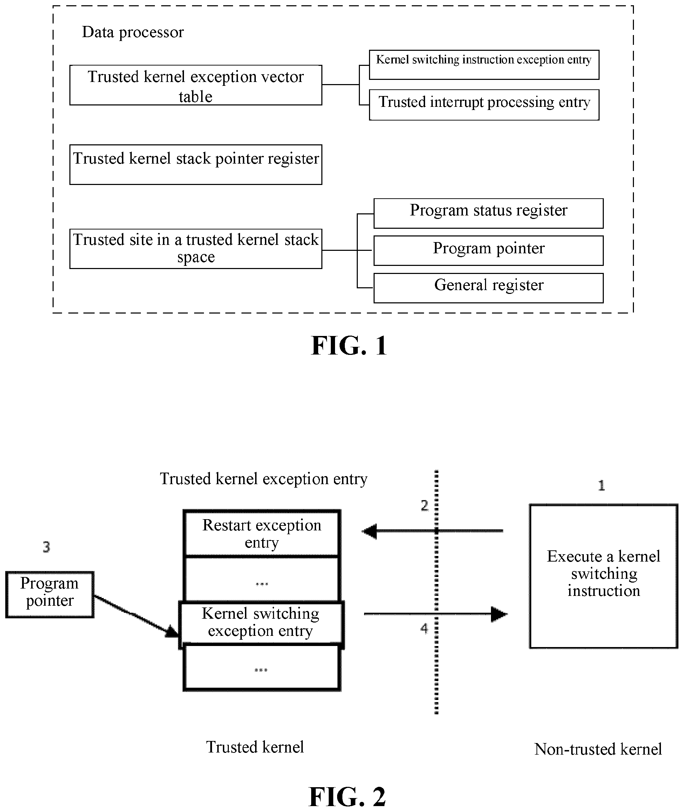

The present invention provides a trusted kernel-based anti-attack data processor. FIG. 1 shows a schematic diagram of a basic architecture of a data processor according to the present invention. As shown in FIG. 1, the data processor includes a trusted kernel exception vector table, a trusted kernel stack pointer register and a trusted site in a trusted kernel stack space.

Specifically, the trusted kernel exception vector table includes two kinds of processing entries of kernel switching, i.e., a kernel switching instruction exception entry and a trusted interrupt processing entry. When the data processor performs kernel switching from a non-trusted kernel to a trusted kernel, the trusted kernel can be addressed to the processing entry of the kernel switching and perform the switching according to different manners. The trusted kernel stack pointer register refers to an independent stack pointer that the trusted kernel owns, the stack pointer pointing to a trusted kernel stack space. A trusted site is saved in the trusted kernel stack space. The trusted site includes a current trusted kernel context, and typically includes a program status register, a program pointer, and a general register before the trusted kernel is switched last time. In particular, the program status register includes a flag bit of a starting kernel of the kernel switching.

Specifically, the kernel switching manner for the data processor includes a kernel switching instruction, a kernel switching return instruction, or an interrupt response. In particular, when the kernel switching is performed by using the kernel switching return instruction, it can be judged, according to a flag position of the starting kernel of the program status register, whether to return to the starting kernel or stay in the current kernel.

In particular, when the kernel switching is performed by using the kernel switching instruction or the kernel switching return instruction, the trusted kernel is addressed to a kernel switching instruction exception entry according to an entry vector table called by a cross-kernel task of the trusted kernel. When the kernel switching is performed by using the interrupt response, the trusted kernel is addressed to the trusted interrupt processing entry according to the trusted kernel exception vector table.

FIG. 2 shows a schematic running diagram when a data processor executes a kernel switching instruction normally according to an embodiment of the present invention. As shown in the drawing, the current data processor executes a kernel switching command normally in the non-trusted kernel. The data processor stores a non-trusted site located in the non-trusted kernel, and switches the non-trusted kernel to the trusted kernel through a switching process.

Further, the data processor addresses a kernel switching instruction exception entry in the trusted kernel exception vector table and performs kernel switching. A kernel switching exception handling code of the trusted kernel executes a kernel switching instruction, and the trusted kernel returns to the non-trusted kernel through a switching process. The data processor resumes the execution after restoring the non-trusted site.

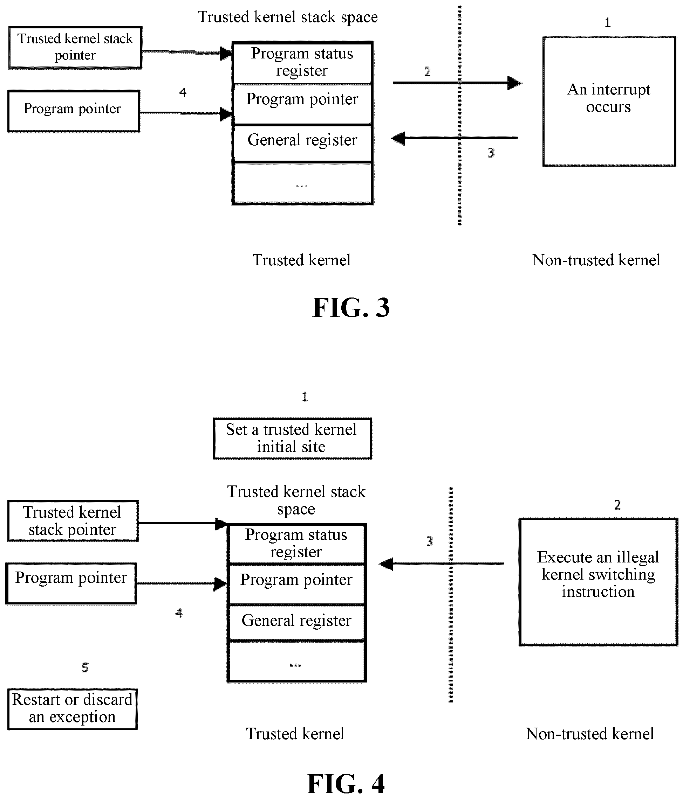

FIG. 3 is a schematic running diagram showing that a non-trusted kernel executes a kernel switching return instruction to return to a trusted kernel after the trusted kernel responds to an interrupt of the non-trusted kernel according to an embodiment of the present invention. As shown in the drawing, the current data processor runs in a trusted kernel. When an interrupt occurs in a non-trusted kernel, the data processor switches to the non-trusted kernel to respond to the interrupt through a switching process after saving a trusted site into a trusted kernel stack space. In particular, the trusted kernel stack pointer register points to the foregoing trusted kernel stack space.

Further, the non-trusted kernel returns to the trusted kernel by executing a kernel switching instruction with an interrupt processing function. The data processor resumes the execution after restoring the trusted site according to the trusted kernel stack space that the trusted kernel stack pointer register points to.

FIG. 4 is a schematic running diagram of an illegal kernel switching exception according to an embodiment of the present invention. As shown in the drawing, the trusted kernel is provided with a site before the trusted kernel is switched to the non-trusted kernel for the first time, the site is saved in the trusted kernel stack space that the trusted kernel stack pointer register points to, and then the trusted kernel is switched to the non-trusted kernel by executing the kernel switching instruction.

Further, the non-trusted kernel modifies a flag bit of a starting kernel of the program status register and is switched to the trusted kernel by executing the kernel switching return instruction. The data processor switches the non-trusted kernel to the trusted kernel for execution after saving the non-trusted kernel site.

Further, the data processor restores the trusted site according to the trusted kernel stack space that the trusted kernel stack pointer register points to. After the data processor executes an illegal kernel switching exception handling code, an exception can be restarted or discarded, thus preventing intrusion of illegal kernels.

The trusted kernel-based anti-attack data processor provided in the embodiments of the present invention provides an underlying software protection mechanism for all switching entries of the trusted kernel and can make switching between a trusted kernel and a non-trusted kernel more secure.

The above descriptions are merely specific implementation manners of the present invention, but the protection scope of the present invention is not limited to this. Variations or replacements that can be easily thought of by any person skilled in the art within the technical scope disclosed in the present invention shall all be encompassed in the protection scope of the present invention. Therefore, the protection scope of the present invention should be subject to the protection scope of the claims.

## Claims

1. A trusted kernel-based anti-attack data processor, comprising:
a trusted kernel exception vector table configured to provide a processing entry for kernel switching between a trusted kernel and a non-trusted kernel;
a trusted kernel stack pointer register configured to store a trusted kernel stack pointer that points to a trusted kernel stack space, wherein the trusted kernel stack pointer register is an independent stack pointer owned by the trusted kernel; and
a trusted site in the trusted kernel stack space, the trusted site comprising a program status register configured to store a flag bit of a starting kernel for the kernel switching, a program pointer, and a general register, wherein the data processor is configured to store data in the trusted site when the data processor runs within the trusted kernel when switching from the trusted kernel to the non-trusted kernel;
wherein when the data processor performs kernel switching to or from a non-trusted kernel to a trusted kernel, the trusted kernel is addressed to the processing entry of the kernel switching and performs the switching.

2. The data processor according to claim 1, wherein the processing entry that provides kernel switching comprises a kernel switching instruction exception entry and a trusted interrupt processing entry.

3. The data processor according to claim 2, wherein the trusted kernel is addressed to the processing entry of the kernel switching and performs the switching by means of a kernel switching instruction, a kernel switching return instruction, or an interrupt response.

4. The data processor according to claim 3, wherein when the trusted kernel performs the switching by means of the kernel switching return instruction, according to a flag bit of a starting kernel of the program status register, whether to return to the starting kernel or stay in the current kernel.

5. The data processor according to claim 3, wherein the trusted kernel is addressed to the kernel switching instruction exception entry through an entry vector table called by a cross-kernel task.

6. The data processor according to claim 3, wherein the trusted kernel is addressed to the trusted interrupt processing entry through the trusted kernel exception vector table.

7. The data processor according to claim 3, wherein
when the trusted kernel is switched to the non-trusted kernel in response to a non-trusted interrupt, the trusted kernel saves the trusted site in the trusted kernel stack space; and
after the non-trusted kernel has processed the non-trusted interrupt, the trusted kernel restores the trusted site from the trusted kernel stack space when the non-trusted kernel is switched to the trusted kernel by calling the kernel switching return instruction.

8. The data processor according to claim 7, wherein the trusted site is a site before the trusted kernel is switched to the non-trusted kernel in response to the non-trusted interrupt.

9. The data processor according to claim 3, wherein when the non-trusted kernel modifies a starting kernel flag of the program status register and is switched to the trusted kernel by executing the kernel switching return instruction, the trusted kernel restores the trusted site from the trusted kernel stack space.

10. The data processor according to claim 9, wherein the trusted site is a site before the trusted kernel is proactively switched to the non-trusted kernel for the first time.

## Patentansprüche

1. Auf vertrauenswürdigen Kemeln basierter Anti-Angriffs-Datenprozessor, umfassend:
eine Ausnahmevektortabelle für vertrauenswürdige Kernels, die dazu konfiguriert ist, einen Verarbeitungseintrag zum Kernelwechseln zwischen einem vertrauenswürdigen Kernel und einem nicht vertrauenswürdigen Kernel bereitzustellen;
ein Register für vertrauenswürdige Kernelstapelzeiger, das dazu konfiguriert ist, einen vertrauenswürdigen Kernelstapelzeiger zu speichern, der auf einen vertrauenswürdigen Kernelstapelplatz zeigt, wobei das Register für vertrauenswürdige Kernelstapelzeiger ein unabhängiger Stapelzeiger ist, der dem vertrauenswürdigen Kernel gehört; und
einen vertrauenswürdigen Ort in dem vertrauenswürdigen Kernelstapelplatz, wobei der vertrauenswürdige Ort ein Programmstatusregister umfasst, das dazu konfiguriert ist, ein Markierungsbit eines Startkernels für das Kernelwechseln, einen Programmzeiger und ein allgemeines Register zu speichern, wobei der Datenprozessor dazu konfiguriert ist, Daten an dem vertrauenswürdigen Ort zu speichern, wenn der Datenprozessor innerhalb des vertrauenswürdigen Kernels läuft, wenn von dem vertrauenswürdigen Kernel zu dem nicht vertrauenswürdigen Kernel gewechselt wird;
wobei, wenn der Datenprozessor Kernelwechseln zu oder von einem nicht vertrauenswürdigen Kernel zu einem vertrauenswürdigen Kernel durchführt, der vertrauenswürdige Kernel an den Verarbeitungseintrag des Kernelwechselns adressiert ist und das Wechseln durchführt.

2. Datenprozessor gemäß Anspruch 1, wobei der Verarbeitungseintrag, der Kernelwechseln bereitstellt, einen Ausnahmeeintrag für eine Kernelwechselanweisung und einen Verarbeitungseintrag für einen vertrauenswürdigen Interrupt umfasst.

3. Datenprozessor gemäß Anspruch 2, wobei der vertrauenswürdige Kernel an den Verarbeitungseintrag des Kernelwechselns adressiert ist und das Wechseln mittels einer Kernelwechselanweisung, einer Kernelwechselrückkehranweisung oder einer Interruptantwort durchführt.

4. Datenprozessor gemäß Anspruch 3, wobei, wenn der vertrauenswürdige Kernel das Wechseln mittels der Kernelwechselrückkehranweisung durchführt, gemäß einem Markierungsbit eines Startkernels des Programmstatusregisters, ob zu dem Startkernel zurückzukehren oder in dem aktuellen Kernel zu verbleiben ist.

5. Datenprozessor gemäß Anspruch 3, wobei der vertrauenswürdige Kernel durch eine Eintragsvektortabelle, die durch eine kernelübergreifende Aufgabe aufgerufen wird, an den Ausnahmeeintrag für eine Kernelwechselanweisung adressiert ist.

6. Datenprozessor gemäß Anspruch 3, wobei der vertrauenswürdige Kernel durch die Ausnahmevektortabelle für vertrauenswürdige Kernels an den Verarbeitungseintrag für einen vertrauenswürdigen Interrupt adressiert ist.

7. Datenprozessor gemäß Anspruch 3, wobei
wenn der vertrauenswürdige Kernel als Reaktion auf einen nicht vertrauenswürdigen Interrupt zu dem nicht vertrauenswürdigen Kernel gewechselt wird, der vertrauenswürdige Kernel den vertrauenswürdigen Ort in dem vertrauenswürdigen Kernelstapelplatz speichert; und
nachdem der nicht vertrauenswürdige Kernel den nicht vertrauenswürdigen Interrupt verarbeitet hat, der vertrauenswürdige Kernel den vertrauenswürdigen Ort aus dem vertrauenswürdigen Kernelstapelplatz wiederherstellt, wenn der nicht vertrauenswürdige Kernel zu dem vertrauenswürdigen Kernel gewechselt wird, indem die Kernelwechselrückkehranweisung aufgerufen wird.

8. Datenprozessor gemäß Anspruch 7, wobei der vertrauenswürdige Ort ein Ort ist, bevor der vertrauenswürdige Kernel als Reaktion auf den nicht vertrauenswürdigen Interrupt zu dem nicht vertrauenswürdigen Kernel gewechselt wird.

9. Datenprozessor gemäß Anspruch 3, wobei, wenn der nicht vertrauenswürdige Kernel eine Startkernelmarkierung des Programmstatusregisters modifiziert und zu dem vertrauenswürdigen Kernel gewechselt wird, indem die Kernelwechselrückkehranweisung ausgeführt wird, der vertrauenswürdige Kernel den vertrauenswürdigen Ort aus dem vertrauenswürdigen Kernelstapelplatz wiederherstellt.

10. Datenprozessor gemäß Anspruch 9, wobei der vertrauenswürdige Ort ein Ort ist, bevor der vertrauenswürdige Kernel zum ersten Mal proaktiv zu dem nicht vertrauenswürdigen Kernel gewechselt wird.

## Revendications

1. Processeur de données anti-attaque basé sur un noyau sécurisé, comprenant :
une table de vecteurs d'exception de noyau sécurisé configurée pour fournir une entrée de traitement pour la commutation de noyau entre un noyau sécurisé et un noyau non-sécurisé ;
un registre de pointeur de pile de noyau sécurisé configuré pour stocker un pointeur de pile de noyau sécurisé qui pointe vers un espace de pile de noyau sécurisé, dans lequel le registre de pointeur de pile de noyau sécurisé est un pointeur de pile indépendant appartenant au noyau sécurisé ; et
un site sécurisé dans l'espace de pile de noyau sécurisé, le site sécurisé comprenant un registre d'état de programme configuré pour stocker un bit d'indicateur d'un noyau de départ pour la commutation de noyau, un pointeur de programme et un registre général, dans lequel le processeur de données est configuré pour stocker des données dans le site sécurisé lorsque le processeur de données s'exécute dans le noyau sécurisé lors de la commutation du noyau sécurisé au noyau non-sécurisé ;
dans lequel lorsque le processeur de données effectue une commutation de noyau vers ou depuis un noyau non-sécurisé vers un noyau sécurisé, le noyau sécurisé est adressé à l'entrée de traitement de la commutation de noyau et effectue la commutation.

2. Processeur de données selon la revendication 1, dans lequel l'entrée de traitement qui fournit une commutation de noyau comprend une entrée d'exception d'instruction de commutation de noyau et une entrée de traitement d'interruption sécurisée.

3. Processeur de données selon la revendication 2, dans lequel le noyau sécurisé est adressé à l'entrée de traitement de la commutation de noyau et effectue la commutation au moyen d'une instruction de commutation de noyau, d'une instruction de retour de commutation de noyau ou d'une réponse d'interruption.

4. Processeur de données selon la revendication 3, dans lequel lorsque le noyau sécurisé effectue la commutation au moyen de l'instruction de retour de commutation de noyau, selon un bit d'indicateur d'un noyau de départ du registre d'état de programme, indiquant s'il faut revenir au noyau de départ ou rester dans le noyau actuel.

5. Processeur de données selon la revendication 3, dans lequel le noyau sécurisé est adressé à l'entrée d'exception d'instruction de commutation de noyau par l'intermédiaire d'une table de vecteurs d'entrée appelée par une tâche inter-noyaux.

6. Processeur de données selon la revendication 3, dans lequel le noyau sécurisé est adressé à l'entrée de traitement d'interruption sécurisée par l'intermédiaire de la table de vecteurs d'exception de noyau sécurisé.

7. Processeur de données selon la revendication 3, dans lequel
lorsque le noyau sécurisé est commuté vers le noyau non-sécurisé en réponse à une interruption non-sécurisée, le noyau sécurisé enregistre le site sécurisé dans l'espace de pile du noyau sécurisé ; et
après que le noyau non-sécurisé a traité l'interruption non-sécurisée, le noyau sécurisé restaure le site sécurisé à partir de l'espace de pile de noyau sécurisé lorsque le noyau non-sécurisé est commuté vers le noyau sécurisé en appelant l'instruction de retour de commutation de noyau.

8. Processeur de données selon la revendication 7, dans lequel le site sécurisé est un site avant que le noyau sécurisé ne soit commuté vers le noyau non-sécurisé en réponse à l'interruption non-sécurisée.

9. Processeur de données selon la revendication 3, dans lequel lorsque le noyau non-sécurisé modifie un indicateur de noyau de départ du registre d'état de programme et est commuté vers le noyau sécurisé en exécutant l'instruction de retour de commutation de noyau, le noyau sécurisé restaure le site sécurisé à partir de l'espace de pile de noyau sécurisé.

10. Processeur de données selon la revendication 9, dans lequel le site sécurisé est un site avant que le noyau sécurisé ne soit commuté de manière proactive vers le noyau non-sécurisé pour la première fois.
